# DEMANDE DE BREVET EUROPEEN

(11) **EP 0 564 324 A1**
(43) Date de publication de la demande: **06.10.1993**
(21) Numéro de dépôt: 93400751.9
(22) Date de dépôt: 23.03.1993
(51) Int. Cl.: B64C 25/58, F16F 9/06

(54) **Amortisseur-vérin destiné à l'équipement d'atterrisseurs d'aérodynes, notamment d'hélicoptères**

(30) Priorité: 31.03.1992 FR 9203878
(71) Demandeur: MESSIER BUGATTI, F-78140 Velizy Villacoublay (FR)
(72) Inventeur: Derrien, Michel, F-78000 Versailles (FR)
(74) Mandataire: Jaunez, Xavier

(57) **Abrégé**

L'invention concerne un amortisseur-vérin comportant un corps cylindrique et une tige creuse à piston annulaire.

Conformément à l'invention, le corps cylindrique (101) comporte un piston séparateur (126) délimitant deux chambres de fluide hydraulique (127, 128) dont l'une (128) communique par l'intermédiaire d'un distributeur (130) avec le circuit hydraulique de l'aérodyne, ce distributeur étant automatiquement fermé en fin de descente de l'atterrisseur ; la chambre annulaire (124) communique par un second distributeur (125) avec ce circuit hydraulique. Les distributeurs (125, 130) permettent ainsi de commander l'extension et la rétraction de l'amortisseur-vérin. De plus, un moyen d'écrêtage d'efforts (135, 140) est agencé dans une extension (112) s'étendant au-delà d'un fond (104) du corps (101) formant l'une des butées du piston séparateur (126).

## Description

La présente invention se rapporte à un amortisseur-vérin destiné à l'équipement d'atterrisseurs d'aérodynes, notamment d'hélicoptères, en étant conçu pour pouvoir faire face à une situation d'atterrissage en catastrophe (situation communément appelée "crash").

Il convient tout d'abord de rappeler que dans le cas particulier des hélicoptères, on organise en général un écrêtage des efforts du système destiné à absorber l'énergie lors d'une chute de l'hélicoptère à grande vitesse suite à une panne du système de sustentation. Lorsque le train d'atterrissage de l'hélicoptère est du type à balancier, l'amortisseur habituellement utilisé est articulé à son extrémité inférieure sur le balancier et à son extrémité supérieure sur la structure de l'hélicoptère, en étant disposé sensiblement verticalement, de sorte que la réaction du sol tend, par l'intermédiaire de la roue ou des roues associées, à faire pivoter le balancier et à enfoncer la tige de l'amortisseur dans le corps dudit amortisseur. De ce fait, en cas d'atterrissage en catastrophe, comme la vitesse verticale d'impact est beaucoup plus importante qu'en fonctionnement normal, il apparaît nécessaire de prévoir un écrêtage d'efforts qui soit capable d'entrer en action aussi rapidement que possible.

On connaît ainsi des amortisseurs à chambre basse pression équipés de moyens d'écrêtage d'efforts sous forme d'un piston séparateur délimitant une chambre de fluide gazeux à haute pression. Dans ce cas, lorsque les conditions d'utilisation sont normales, la réaction verticale du sol provoque une rentrée de la tige dans le corps principal, qui s'accompagne d'une compression du volume gazeux contenu dans la chambre basse pression, ce mouvement de rentrée étant freiné par un dispositif de laminage. Par contre, en cas d'atterrissage en catastrophe, la vitesse d'impact étant beaucoup plus élevée, la pression induite par le dispositif de laminage est communiquée par l'huile du cylindre au piston séparateur, et, comme la pression alors appliquée au piston séparateur dépasse la pression de gonflage de la chambre haute pression, ledit piston descend en comprimant ladite chambre.

De tels amortisseurs sont utilisés à l'heure actuelle pour équiper des atterrisseurs d'avions ou d'hélicoptères, mais ils ne sont pas conçus pour assurer en plus une fonction de vérin pour les manoeuvres de descente et de relevage, de sorte que cette fonction est assurée par un vérin de manoeuvre séparé.

Dans certains cas, on cherche en effet à avoir un amortisseur qui soit également capable d'assurer une fonction de vérin, et on parle alors d'un amortisseur-vérin.

On connaît déjà un amortisseur-vérin comportant un corps cylindrique, et une tige creuse à extrémité ouverte formant piston annulaire coulissant avec étanchéité dans ce corps cylindrique, ainsi qu'un moyen d'amortissement hydraulique à diaphragme surmonté d'un volume de fluide hydraulique délimitant une chambre de fluide gazeux (par exemple de l'azote) à basse pression, et un moyen d'écrêtage d'efforts intervenant en cas d'atterrissage en catastrophe.

Le document FR-A-2 608 242 décrit un amortisseur-vérin de ce type, comportant plus précisément un corps principal agencé en bas et une tige-piston agencée en haut, le corps principal comportant en extrémité inférieure une chambre haute pression qui est adjacente, par une membrane souple de séparation pouvant s'appuyer sur un support rigide perforé solidaire dudit corps, à une chambre basse pression, ainsi qu'un dispositif de laminage freinant les déplacements de la tige dans le corps principal par laminage du fluide contenu dans ledit corps et adjacent à la chambre basse pression. La tige-piston est quant à elle creuse, et reçoit un piston séparateur délimitant deux chambres hydrauliques. Le dispositif de laminage inclut un clapet central de surpression intervenant en cas d'enfoncement brutal de la tige, et ce dispositif est en outre associé à un tube cylindro-conique formant absorbeur d'énergie par déformation plastique.

Avec l'amortisseur-vérin décrit dans le document précité, la fonction vérin est assurée en prévoyant le raccordement de deux chambres hydrauliques (une chambre de rétraction ou de relevage de l'atterrisseur commandant la rentrée de la tige dans le corps, et une chambre de descente ou de sortie de l'atterrisseur commandant la sortie de la tige hors du corps) à un bloc hydraulique distributeur qui peut ainsi assurer l'alimentation des chambres en fluide hydraulique sous pression ou autoriser leur vidange vers une bâche du circuit hydraulique de l'aérodyne.

Un tel amortisseur-vérin reste cependant relativement complexe, et nécessite en particulier un dispositif de laminage asservi en vitesse qui doit être ajusté avec précision.

L'invention a pour objet de concevoir un amortisseur-vérin qui soit à la fois performant en situation d'atterrissage en catastrophe, et comporte un nombre minimal de composants.

L'invention a également pour objet de réaliser un amortisseur-vérin dont le moyen d'écrêtage d'efforts intervient automatiquement en cas d'atterrissage en catastrophe, sans avoir à prévoir un clapet spécial asservi à la vitesse, et dont la structure permet, pour la fonction vérin, de n'utiliser qu'un volume relativement peu important de fluide hydraulique.

Il s'agit plus particulièrement d'un amortisseur-vérin destiné à l'équipement d'atterrisseurs d'aérodynes, notamment d'hélicoptères, comportant un corps cylindrique, et une tige creuse à extrémité ouverte formant piston annulaire coulissant avec étanchéité dans ce corps cylindrique, ainsi qu'un moyen d'amortissement hydraulique à diaphragme surmonté d'un volume de fluide hydraulique délimitant une chambre de fluide gazeux à basse pression, et un moyen d'écrêtage d'efforts intervenant en cas d'atterrissage en catastrophe, caractérisé par le fait que le corps cylindrique comporte un piston séparateur mobile entre deux butées associées et délimitant deux chambres de fluide hydraulique, dont l'une communique directement avec l'intérieur de la tige creuse dans laquelle est disposé le moyen d'amortissement hydraulique à diaphragme, et l'autre communique, par l'intermédiaire d'un premier distributeur, avec le circuit hydraulique de l'aérodyne, ce premier distributeur étant automatiquement fermé en fin de descente de l'atterrisseur, ledit corps cylindrique et ladite tige creuse délimitant en outre une chambre annulaire qui communique également, par l'intermédiaire d'un second distributeur, avec ledit circuit hydraulique, lesdits premier et second ditributeurs permettant ainsi de commander l'extension ou la rétraction de l'amortisseur-vérin pour la descente ou le relevage de l'atterrisseur, et par le fait que le moyen d'écrêtage d'efforts est agencé dans une extension s'étendant au-delà d'un fond du corps cylindrique formant l'une des butées du piston séparateur.

Selon une première variante d'exécution, le moyen d'écrêtage d'efforts comporte une chambre de fluide gazeux à haute pression agencée dans une extension du corps cylindrique.

De préférence alors, la tige-piston est associée à la chambre haute pression, avec un piston coulissant dans ladite chambre et une tige qui traverse un fond intermédiaire du corps cylindrique, ledit fond intermédiaire formant butée pour le piston séparateur et présentant des moyens de communication directe à clapet flottant. En particulier, la chambre de fluide hydraulique délimitée par le fond intermédiaire du corps cylindrique et par le piston séparateur communique avec le circuit hydraulique de l'aérodyne par un premier orifice dudit corps agencé au voisinage dudit fond intermédiaire.

Conformément à un mode d'exécution particulier, le piston séparateur coulisse sur la tige de la tige-piston mobile, et l'autre butée dudit piston séparateur est portée par ladite tige ; de plus, la tige de la tige-piston mobile peut se terminer par un élargissement qui constitue à la fois l'autre butée du piston séparateur, et une butée pour la tige creuse en position de rétraction normale. Il est également intéressant que la tige creuse présente extérieurement une butée de fin de course coopérant avec le bord libre du corps cylindrique pour limiter la course de rétraction en cas d'atterrissage en catastrophe.

Selon une autre variante d'exécution, le moyen d'écrêtage d'efforts comporte un tube dont l'écrasement procure l'absorption d'énergie recherchée, ce tube étant logé dans un corps d'extension qui reçoit télescopiquement le corps cylindrique.

Avantageusement alors, le corps cylindrique et le corps d'extension sont liés entre eux par au moins un pion qui est prévu pour se rompre par cisaillement sous un effort prédéterminé.

Il est également intéressant que le corps d'extension porte une tige centrale creuse qui traverse le fond du corps cylindrique formant butée pour le piston séparateur, ladite tige creuse présentant un orifice latéral par l'intermédiaire duquel la chambre de fluide hydraulique délimitée par ledit fond et ledit piston séparateur communique avec le circuit hydraulique de l'aérodyne, via un orifice associé dudit corps d'extension.

De préférence alors, le piston séparateur coulisse sur la tige centrale creuse du corps d'extension, et l'autre butée dudit piston séparateur est portée par ladite tige centrale creuse. Conformément à un mode d'exécution particulier, la tige centrale creuse se termine par un élargissement qui constitue à la fois l'autre butée du piston séparateur, et une butée pour la tige creuse limitant la course de rétraction en cas d'atterrissage en catastrophe.

Il est par ailleurs avantageux que la tige creuse présente extérieurement une butée de fin de course coopérant avec le bord libre du corps cylindrique en fin de rétraction normale.

De préférence encore, un moyen déformable d'anti-rotation, par exemple une lame élastique, est prévu entre le corps cylindrique et le corps d'extension.

D'autres caractéristiques et avantages de l'invention apparaîtront plus clairement à la lumière de la description qui va suivre et des dessins annexés, concernant un mode d'exécution particulier, en référence aux figure où:

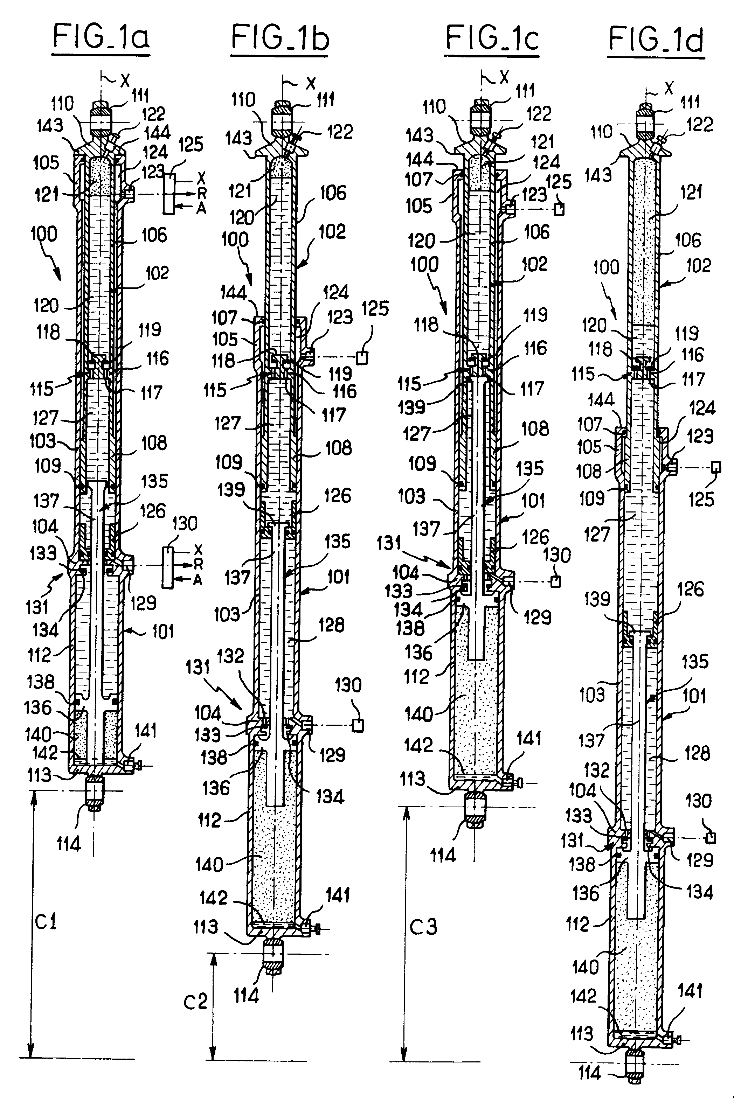

- les figures 1a, 1b, 1c et 1d illustrent en coupe axiale un amortisseur-vérin conforme à l'invention dans différentes positions relatives de ses éléments constitutifs, c'est-à-dire respectivement en position rétractée pour un relevage de l'atterrisseur en situation d'atterrissage en catastrophe, en position de charge statique ou dynamique normale, en position rétractée en fin de relevage normal, et en position d'extension maximale (position détendue après descente de l'atterrisseur) ;

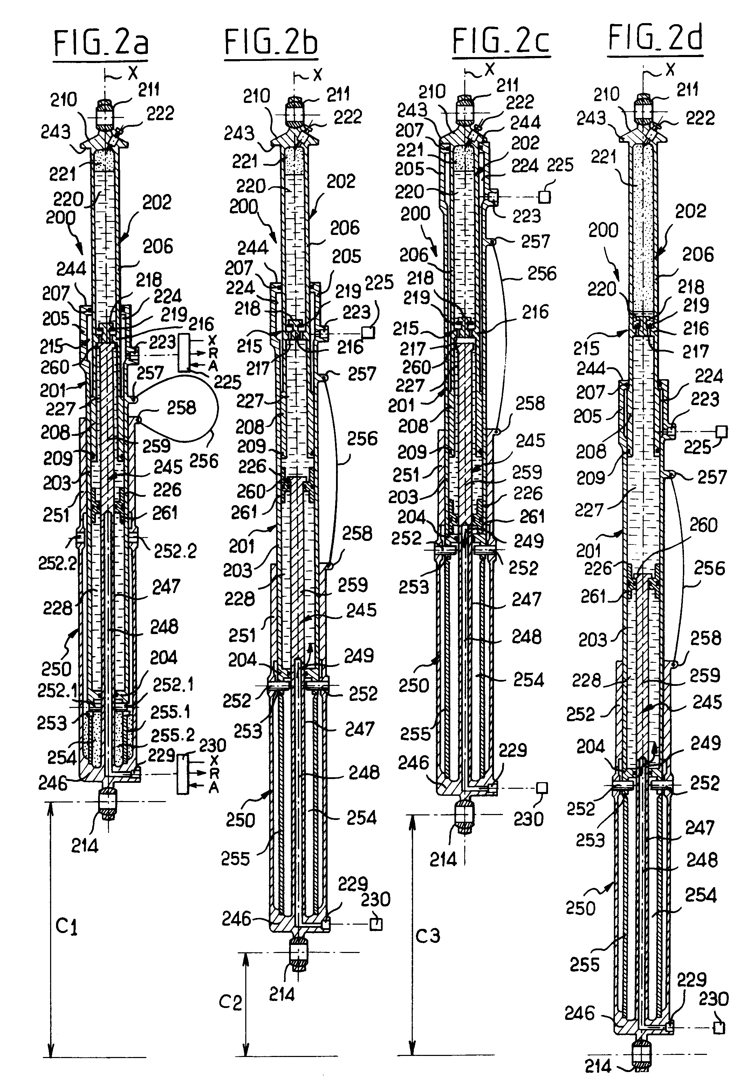

- les figures 2a, 2b, 2c, 2d illustrent en coupe une autre variante d'amortisseur-vérin, dans les mêmes positions relatives que celles mentionnées ci-dessus, cet amortisseur-vérin comportant un moyen d'écrêtage d'efforts à tube composite dont l'écrasement procure l'absorption d'énergie recherchée.

Les figures 1a à 1d illustrent un amortisseur-vérin 100 conforme à l'invention, destiné à l'équipement d'un atterrisseur d'aérodyne, par exemple d'un atterrisseur d'hélicoptère. L'amortisseur-vérin 100 comporte un corps cylindrique 101 et une tige creuse 102 coulissant avec étanchéité dans ce corps cylindrique, selon l'axe X de celui-ci.

L'amortisseur-vérin 100 pourra être articulé par sa tige sur la structure de l'aérodyne, et par son corps sur l'atterrisseur relevable de cet aérodyne. En particulier, dans le cas d'un hélicoptère, l'extrémité supérieure 110 de la tige creuse 102 sera alors articulée par l'intermédiaire d'un embout rotulé 111 sur la structure de l'hélicoptère, tandis que le corps cylindrique 101 sera articulé par l'intermédiaire d'un embout rotulé 114 sur le balancier d'atterrisseur, qui est lui même articulé sur la structure de l'hélicoptère, de sorte que la position d'extension complète illustrée en figure 1d correspond à l'atterrisseur descendu, tandis que la position rétractée de la figure 1c correspond à l'atterrisseur relevé.

On va maintenant préciser les différents composants structurels de l'amortisseur-vérin 100, avant de décrire les différentes positions que peut prendre cet amortisseur-vérin, en se référant aux figures 1a à 1d.

La tige creuse 102 présente une extrémité ouverte du côté de l'intérieur du corps cylindrique 101, avec une portion tige 106 et une portion piston 108 qui coulissent avec étanchéité, grâce à des joints associés 107 et 109, dans le corps cylindrique 101. La tige creuse 102 est en outre équipée d'un moyen d'amortissement hydraulique à diaphragme 115, surmonté d'un volume de fluide hydraulique 120 qui délimite une chambre de fluide gazeux à basse pression 121, l'extrémité fermée 110 de la tige creuse 102 comportant une valve de remplissage et de gonflage 122. Le moyen d'amortissement hydraulique à diaphragme pourra être de type conventionnel, comme celui qui est illustré ici, avec une cloison intermédiaire 116 présentant des orifices de passage 117, et surmonté par un pion central 118 sur lequel coulisse un clapet flottant 119 dont la course est limitée par un élargissement d'extrémité du pion 118. Lorsque le clapet flottant 119 est décollé de la cloison 116, le fluide hydraulique transite par les orifices 117 dans la chambre 120, ce qui correspond à une phase de compression de la chambre basse pression 121. A l'inverse, lorsque le clapet flottant 119 est en appui sur le fond 116, il contrôle le laminage grâce à des perçages (non visibles ici) prévus au niveau de certains au moins des orifices de passage 117, conformément à une technique bien connue.

Le corps cylindrique 101 comporte une portion principale 103, délimitée inférieurement par un fond 104 et supérieurement par une portion élargie 105, qui définit, avec la tige-piston 102, une chambre annulaire 124.

Conformément à un aspect essentiel de l'invention, le corps cylindrique 101 comporte un piston séparateur 126 délimitant deux chambres de fluide hydraulique 127 et 128, dont l'une (en l'espèce la chambre 127) communique directement avec l'intérieur de la tige creuse 102, et l'autre (en l'espèce la chambre 128) communique par l'intermédiaire d'un premier ditributeur 130, avec le circuit hydraulique de l'aérodyne, et la chambre annulaire 124 communique également avec ce circuit hydraulique par l'intermédiaire d'un second distributeur 125. En l'espèce, la partie principale 103 du corps cylindrique 101 présente un orifice d'extrémité 123 pour le raccordement du distributeur 125, et, au voisinage du fond 104, un orifice 129 pour le raccordement avec le distributeur 130.

Le premier distributeur 130 et le second distributeur 125 permettent de commander l'extension ou la rétraction de l'amortisseur-vérin 100 pour la descente ou le relevage de l'atterrisseur, et le premier distributeur 130 est en outre agencé pour être automatiquement (par exemple au moyen d'un capteur ad hoc ou d'une temporisation adaptée) fermé en fin de descente de l'atterrisseur. Sur la figure la, on a ainsi représenté deux distributeurs 125 et 130 à trois lignes de connexion notées X, R et A, respectivement associées à la fermeture, au retour vers la bâche du circuit, et à l'alimentation en fluide sous pression (pour plus de clarté, ces mêmes distributeurs ont été seulement schématisés sur les figures 1b, 1c et 1d).

Conformément à une autre caractéristique de l'invention, l'amortisseur-vérin 100 comporte un moyen d'écrêtage d'efforts qui est agencé dans une extension 112 s'étendant au-delà du fond 104 précité du corps cylindrique 101, lequel fond forme l'une des butées du piston séparateur 126.

En l'espèce, l'extension 112 n'est autre qu'un prolongement du corps cylindrique 101, qui se termine par un fond 113 sur lequel est agencé l'embout rotulé 114 précité associé à l'articulation avec le balancier de l'atterrisseur. Le fond 104 est dans ce cas un fond intermédiaire, de sorte que les fonds 104 et 113 délimitent, intérieurement à l'extension 112, une chambre 140 de fluide gazeux à haute pression, le gonflage de cette chambre étant assuré par une valve associée 141, et une petite quantité de fluide hydraulique 142 étant, conformément à l'habitude, prévue sur le fond 113 de cette chambre haute pression.

Le moyen d'écrêtage d'efforts comporte en outre une tige-piston mobile 135 qui est associée à la chambre haute pression 140, avec un piston 136 coulissant avec étanchéité, par un joint associé 138, dans la chambre haute pression 140, et une tige 137 qui traverse le fond intermédiaire 104 du corps cylindrique 101. Le fond intermédiaire 104 comporte des moyens de communication 131, avec des orifices de passage 132, et, du côté du piston 136, un clapet flottant 133 dont la course de décollement des orifices précités est limitée par une butée associée 134. En l'espèce, bien que ceci ne soit aucunement obligatoire, le piston séparateur 126 coulisse sur la tige 137, ledit piston présentant des joints (non référencés) pour assurer l'étanchéité de coulissement sur la tige 137, et contre la surface intérieure du corps cylindrique 103. Il est alors intéressant de prévoir que la tige 137 se termine par un élargissement 139 qui constitue l'autre butée du piston séparateur 126, complétant la première butée constituée par le fond intermédiaire 104. Le piston séparateur 126 est ainsi mobile entre une position de butée basse (par exemple illustrée aux figures 1a et 1c), et une position de butée haute contre l'élargissement 139 de la tige 137 (comme illustré aux figures 1b et 1d). En outre, ainsi que cela est visible sur la figure 1c, l'élargissement 139 de la tige 137 remplit une fonction supplémentaire, en constituant également une butée pour la tige creuse 102 en position de rétraction normale.

Dans le cas d'un atterrissage en catastrophe, on a ici prévu une course de rétraction plus importante que celle que l'on trouve en fin de relevage, la limitation de course étant alors donnée par la coopération entre une butée 143 solidaire de l'extrémité 110 de la tige creuse 102 et le bord libre 144 de l'extrémité 105 du corps cylindrique 101.

On va maintenant décrire plus en détail le mode de fonctionnement de l'amortisseur-vérin 100, en se référant aux différentes positions relatives de ces éléments constitutifs qui sont illustrées aux figures 1a, 1b, 1c et 1d.

Lorsque l'atterrisseur est relevé, l'amortisseur-vérin 100 est en position rétractée comme illustré sur la figure 1c. Dans cette position, le piston séparateur 126 est en butée basse sur le fond intermédiaire 104, et la tige creuse 102 est en butée, par sa cloison 116, sur l'extrémité 139 de la tige 137. La course de rétraction par rapport à l'amortisseur-vérin complètement détendu (tel qu'illustré sur la figure 1d) est notée C3. Lorsque l'on déclenche la descente de l'atterrisseur, le distributeur 125 est actionné de façon à mettre en communication l'orifice 123 de la chambre annulaire 124 avec la bâche du circuit hydraulique (non représentée ici) de l'aérodyne (par la ligne R), et le distributeur 130 permet d'assurer l'alimentation en fluide sous pression par l'orifice 129 (par la ligne A). Le piston séparateur 126 se soulève d'abord du fond intermédiaire 104 et repousse la tige creuse 102 hors du corps cylindrique 103, jusqu'à ce que ce piston séparateur arrive en butée haute contre l'élargissement 139 de la tige 137. L'extension se poursuit ensuite par une sortie complète de la tige creuse 102, un certain volume de fluide de la chambre 120 transitant dans la chambre 127 sous l'action du gaz contenu dans la chambre basse pression 121. La position finale est alors celle qui est illustrée sur la figure 1d, et, dès que cette position est atteinte, le distributeur 130 se ferme automatiquement (ligne X).

Si l'atterrissage se passe alors dans des conditions estimées normales, c'est-à-dire avec une composante verticale de vitesse dont la valeur reste inférieure à une limite prédéterminée, par exemple 3 ou 4 m par seconde, l'amortisseur-vérin 100 se comporte alors comme un amortisseur classique. En effet, du fait de la fermeture du distributeur 130 qui a été réalisée automatiquement en fin de descente, le fluide hydraulique contenu dans la chambre 128, et le piston séparateur 126 qui surmonte ce volume, constituent un ensemble monolithique rigide qui est perçu pour l'amortisseur-vérin comme un fond. Dans ce cas, le fluide de la chambre 127 transite par les orifices 117 dans la chambre hydraulique 120, en comprimant le gaz de la chambre basse pression 121, le clapet flottant 119 se soulevant lors de ce mouvement de fluide. La figure 1b illustre ainsi une position qui correspond à l'amortisseur-vérin sous charge statique ou dynamique, la course de rétraction par rapport à la position complètement détendue étant alors notée C2.

Ainsi, tant que les efforts restent inférieurs à un seuil prédéterminé, dont la valeur est donnée par la pression du gaz dans la chambre haute pression 140, toute la partie inférieure de l'amortisseur-vérin se comporte comme un ensemble inerte monolithique.

Par contre, si on se trouve en situation d'atterrissage en catastrophe, c'est-à-dire si les efforts transmis par les roues de l'atterrisseur tendent à provoquer un enfoncement brutal de la tige creuse dans le corps cylindrique, alors le moyen d'écrêtage d'efforts est automatiquement déclenché, c'est-à-dire qu'une partie importante du fluide hydraulique contenu dans la chambre hydraulique 128, et qui concerne le fluide du circuit de l'aérodyne, passe rapidement dans l'extension 112 en repoussant le piston 136 de la tige-piston mobile 135, et en comprimant le gaz de la chambre haute pression 140. On trouve aussi un certain transit de volume de fluide passant dans la chambre 120 de la tige creuse 102, en comprimant le gaz de la chambre basse pression 121. L'amortisseur-vérin 100 est ainsi capable de se rétracter très vite, en absorbant de l'énergie, et ce jusqu'à une position de butée qui est ici donnée par le contact entre la butée 143 de la tige creuse et le bord supérieur 144 du corps cylindrique. La position finale est alors celle qui est illustrée sur la figure la, et la course de rétraction par rapport à la position complètement détendue de la figure 1d a été notée C1. Il convient de noter que le clapet flottant 133 qui a découvert les orifices 132 lors du transit de fluide hydraulique vers la chambre haute pression 140, revient, une fois la position finale atteinte, contre ces orifices, et assure par des perçages ad hoc (non visibles ici) un contrôle de la détente, ce qui permet d'éviter un effet de rebond qui serait défavorable.

Après décollage, l'amortisseur-vérin 100 passe progressivement de la position illustrée en figure 1b à la position complètement détendue illustrée en figure 1d. Ensuite, le distributeur 130 est actionné pour assurer la vidange de la chambre de fluide 128 (par la ligne R), et le distributeur 125 assure l'alimentation en fluide sous pression par l'orifice associé 123 (par la ligne A). La vidange de la chambre de fluide 128 fait redescendre le piston séparateur 126 jusqu'à ce que celui-ci arrive en butée basse contre le fond intermédiaire 104. Enfin, le fluide transitant à l'intérieur de la tige creuse 102 comprime le gaz de la chambre basse pression 121, et la rentrée de la tige creuse dans le corps cylindrique se poursuit jusqu'à la butée, contre l'élargissement 139, de la tige-piston alors immobile 135. L'amortisseur-vérin arrive finalement à la position relevée illustrée en figure 1c. Une fois le relevage terminé, on réalise par le distributeur 125 la fermeture de l'orifice 123 pour assurer le verrouillage de l'amortisseur-vérin.

A titre indicatif, un amortisseur-vérin équipant un atterrisseur d'hélicoptère et réalisé conformément à la structure précédemment décrite, permet d'obtenir des courses de rétraction correspondant sensiblement à des valeurs respectives C1 = 620 mm, C2 = 250 mm et C3 = 580 mm.

L'amortisseur-vérin 100 qui vient d'être décrit présente de nombreux avantages pratiques : outre la simplicité de sa structure, il permet d'obtenir un écrêtage d'efforts effectué automatiquement par la chambre haute pression, de sorte qu'il devient inutile de prévoir un distributeur spécial asservi à la vitesse, et de plus le volume de fluide hydraulique associé à la fonction vérin est relativement peu important.

On a illustré aux figures 2a, 2b, 2c, 2d, une autre variante de l'amortisseur-vérin conforme à l'invention, dans les mêmes positions relatives que celles qui viennent d'être décrites en se référant aux figures 1a à 1d, cet amortisseur-vérin différant essentiellement du précédent par la structure et l'agencement du moyen d'écrêtage d'efforts.

L'amortisseur-vérin 200 ainsi illustré comporte un certain nombre de composants identiques ou analogues à ceux de l'amortisseur-vérin 100 précédemment décrit, de sorte que l'on conservera pour ses composants les mêmes références augmentées de cent, sans les décrire à nouveau.

L'amortisseur-vérin 200 comporte un corps cylindrique 201 et une tige creuse 202. La tige creuse est réalisée identiquement à celle de l'amortisseur-vérin précédent et coulisse de la même façon dans la partie supérieure du corps cylindrique 201. Par contre, la partie inférieure du corps cylindrique est reçue téléscopiquement dans un corps d'extension 250, qui présente un fond 246 sur lequel est monté l'embout rotulé d'articulation 214, par exemple associé au balancier de l'atterrisseur.

Conformément à un aspect essentiel de cette variante, le moyen d'écrêtage d'efforts comporte un tube 255 logé dans ce corps d'extension 250, tube dont l'écrasement produit l'absorption d'énergie recherchée.

Le corps d'extension 250 porte ici une tige centrale creuse 245, reliée au fond 246 dudit corps. Cette tige centrale est au moins creuse jusqu'au niveau du fond 204 du corps cylindrique 201, et elle traverse ce fond 204 (qui n'est plus dans ce cas un fond intermédiaire) formant butée inférieure pour le piston séparateur 226. La tige centrale creuse 245 comporte ainsi une portion inférieure creuse 247, dont le conduit central 248 débouche à une extrémité (par un canal associé ménagé dans le fond 246) au niveau d'un orifice 229 du corps d'extension 250 associé au premier distributeur 230, et à son autre extrémité au niveau d'un orifice latéral 249 situé au-dessus du fond 204 lorsque les conditions de fonctionnement restent normales. Le piston séparateur 226 présente ici une extension inférieure 261 de telle façon que, lorsque le piston séparateur est en butée basse (comme illustré sur la figure 2c), l'orifice latéral 249 ne soit pas masqué par le fond dudit piston. Un tube composite 255, par exemple réalisé en fibres de carbone et en résine, est interposé entre le fond 246 du corps d'extension 250 et le bord inférieur 253 du corps cylindrique, en étant disposé dans une chambre arrière associée 254.

Le corps cylindrique 201 et le corps d'extension 250 sont par ailleurs liés entre eux, par exemple par au moins un pion 252 (ici deux pions sont illustrés) prévu pour se rompre par cisaillement sous un effort prédéterminé. La valeur de cet effort de rupture est à rapprocher du seuil qui était déterminé par la pression de la chambre haute pression dans la variante précédemment décrite. La tige centrale creuse 245 permet donc d'assurer la communication entre la chambre de fluide hydraulique 228 (délimitée le fond 204 et le piston séparateur 226) et le circuit hydraulique de l'aérodyne, via l'orifice latéral 229 du corps d'extension 250. De plus, la tige centrale creuse 245 se prolonge supérieurement par une portion 259, qui est ici pleine, et sur laquelle coulisse le piston séparateur 226, de la même manière que pour la tige-piston mobile de la variante précédemment décrite. Comme précédemment, la tige centrale creuse 245 peut se terminer par un élargissement 260 qui constitue à la fois l'autre butée du piston séparateur 226 et une butée pour la tige creuse 202. Cependant, cette dernière butée est ici utilisée pour limiter la course de rétraction en cas d'atterrissage en catastrophe, ainsi que cela.est illustré sur la figure 2a. Enfin, la tige creuse 202 présente extérieurement une butée 243 de fin de course coopérant avec le bord libre 244 du corps cylindrique 201, mais cette coopération intervient cette fois en fin de rétraction normale, comme cela est illustré sur la figure 2c.

On notera enfin la présence d'un moyen déformable d'anti-rotation, ici réalisé sous la forme d'une lame élastique 256, prévu entre le corps cylindrique 201 et le corps d'extension 250 : chacun des corps précités présente en effet un appendice (respectivement 257 et 258) servant à la fixation de la lame élastique d'anti-rotation 256. Cette lame, par son élasticité propre, ne s'oppose pas au coulissement relatif du corps cylindrique 201 par rapport au corps d'extension 250 (ce coulissement télescopique n'intervenant en réalité qu'en cas d'atterrissage en catastrophe, comme illustré sur la figure 2a). En outre, et dans toutes les positions de l'amortisseur-vérin 200, cette lame élastique 256 évite la rotation du corps cylindrique 201 par rapport au corps d'extension 250, et élimine ainsi tout risque d'arrachement de la conduite d'alimentation associée à l'orifice inférieur 229 de ce corps d'extension.

Pour ce qui est des distributeurs 225 et 230, ils n'ont été représentés que sur la figure 2a avec leurs lignes asociées X, R et A.

Si l'on part de la position rétractée de la figure 2c, qui est celle de la fin du relevage de l'atterrisseur, et que l'on souhaite procéder à l'extension de l'amortisseur-vérin 200 pour l'atterrissage, le distributeur 225 assure (par la ligne R) la vidange de la chambre annulaire 224, et l'alimentation en fluide hydraulique sous pression se fait par l'orifice 229 du corps d'extension 250, par la ligne A du distributeur 230, le fluide étant ensuite canalisé par la tige centrale creuse 245, pour déboucher, par l'orifice latéral 249 de celle-ci (conformément à la flèche notée en figure 2d), dans la chambre 228. La figure 2d correspond à la position totalement détendue de l'amortisseur-vérin : le piston séparateur 226 est alors en butée haute contre l'élargissement 260 de la tige centrale creuse 245, et la portion piston 208 de la tige creuse 202 est en butée contre l'extrémité supérieure du corps creux 201. Si les conditions d'atterrissage sont normales, l'amortisseur-vérin 200 se comporte comme un amortisseur classique, c'est-à-dire que la partie inférieure de cet amortisseur-vérin, disposée en dessous du piston séparateur 226 qui surmonte le mur de fluide hydraulique de la chambre 228, se comporte comme un fond pour cet amortisseur. Un certain volume de fluide hydraulique transite de la chambre 227 à la chambre 220, en comprimant le fluide gazeux de la chambre basse pression 221. Comme précédemment bien entendu, le distributeur 230 se ferme automatiquement en fin de descente, ce qui assure le caractère monolithique de la partie inférieure de l'amortisseur-vérin.

Si par contre l'atterrissage s'effectue avec un effort qui dépasse le seuil prédéterminé (donné par la rupture des pions 252), c'est-à-dire si l'on se trouve dans une situation d'atterrissage en catastrophe, l'effort brutal communiqué au corps d'extension 250 provoque alors la rupture par cisaillement des pions 252, ce qui permet la rentrée télescopique du corps 201 dans le corps d'extension 250, en comprimant le tube composite 255 dont l'écrasement procure l'absorption d'énergie désirée. On distingue ainsi sur la figure 2a la position finale dans une telle situation d'atterrissage en catastrophe, chaque pion 252 étant cisaillé en deux portions alors séparées 252.1 et 252.2, et le tube composite étant constitué par un tube résiduel 255.1, et un amalgame de morceaux ou de poudre 255.2 résultant de la désagrégation du tube composite écrasé.

Après décollage enfin, comme pour l'amortisseur-vérin précédent, l'amortisseur-vérin 200 passe progressivement de la position illustrée en figure 2b à la position complètement détendue illustrée en figure 2d. Ensuite, la vidange de la chambre 228 par la tige centrale creuse 245, via l'orifice 229 du corps d'extension 250 et la ligne R du distributeur 230, permet la redescente du piston séparateur 226 jusqu'à sa butée basse contre le fond 204 du corps cylindrique, le distributeur 225 assurant par sa ligne A l'alimentation de la chambre annulaire 224 en fluide sous pression. La tige creuse 202 rentre ainsi dans le corps cylindrique 201, et ce jusqu'à sa butée contre le bord supérieur 244 dudit corps. L'amortisseur-vérin 200 arrive finalement à la position relevée illustrée en figure 2c. On notera que, dans cette position, l'élargissement 260 de la tige centrale creuse 245 n'est pas au contact de la cloison intermédiaire 216 de la tige creuse 202. Ce contact ne se produit en effet qu'en situation d'atterrissage en catastrophe, comme cela est visible sur la figure 2a.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Amortisseur-vérin destiné à l'équipement d'atterrisseurs d'aérodynes, notamment d'hélicoptères, comportant un corps cylindrique, et une tige creuse à extrémité ouverte formant piston annulaire coulissant avec étanchéité dans ce corps cylindrique, ainsi qu'un moyen d'amortissement hydraulique à diaphragme surmonté d'un volume de fluide hydraulique délimitant une chambre de fluide gazeux à basse pression, et un moyen d'écrêtage d'efforts intervenant en cas d'atterrissage en catastrophe, caractérisé par le fait que le corps cylindrique (101 ; 201) comporte un piston séparateur (126 ; 226) mobile entre deux butées associées (104, 139 ; 204, 260) et délimitant deux chambres de fluide hydraulique (127, 128 ; 227, 228), dont l'une (127 ; 227) communique directement avec l'intérieur de la tige creuse (102 ; 202) dans laquelle est disposé le moyen d'amortissement hydraulique à diaphragme (115 ; 215), et l'autre (128 ; 228) communique, par l'intermédiaire d'un premier distributeur (130 ; 230), avec le circuit hydraulique de l'aérodyne, ce premier distributeur étant automatiquement fermé en fin de descente de l'atterrisseur, ledit corps cylindrique et ladite tige creuse délimitant en outre une chambre annulaire (124 ; 224) qui communique également, par l'intermédiaire d'un second distributeur (125 ; 225), avec ledit circuit hydraulique, lesdits premier et second distributeurs permettant ainsi de commander l'extension ou la rétraction de l'amortisseur-vérin (100 ; 200) pour la descente ou le relevage de l'atterrisseur, et par le fait que le moyen d'écrêtage d'efforts (135, 140 ; 252, 255) est agencé dans une extension (112 ; 250) s'étendant au-delà d'un fond (104 ; 204) du corps cylindrique (101 ; 201) formant l'une des butées du piston séparateur (126 ; 226).

2. Amortisseur-vérin selon la revendication 1, caractérisé par le fait que le moyen d'écrêtage d'efforts comporte une chambre (140) de fluide gazeux à haute pression agencée dans une extension (112) du corps cylindrique (101).

3. Amortisseur-vérin selon la revendication 2, caractérisé par le fait qu'une tige-piston mobile (135) est associée à la chambre haute pression (140), avec un piston (136) coulissant dans ladite chambre et une tige (137) qui traverse un fond intermédiaire (104) du corps cylindrique (101), ledit fond intermédiaire formant butée pour le piston séparateur (126) et présentant des moyens de communication directe (132) à clapet flottant (133).

4. Amortisseur-vérin selon la revendication 3, caractérisé par le fait que la chambre de fluide hydraulique (128) délimitée par le fond intermédiaire (104) du corps cylindrique (101) et par le piston séparateur (126) communique avec le circuit hydraulique de l'aérodyne par un premier orifice (129) dudit corps agencé au voisinage dudit fond intermédiaire.

5. Amortisseur-vérin selon la revendication 3 ou 4, caractérisé par le fait que le piston séparateur (126) coulisse sur la tige (137) de la tige-piston mobile (135), et l'autre butée (139) dudit piston séparateur est portée par ladite tige.

6. Amortisseur-vérin selon la revendication 5, caractérisé par le fait que la tige (137) de la tige-piston mobile (135) se termine par un élargissement (139) qui constitue à la fois l'autre butée du piston séparateur (126), et une butée pour la tige creuse (102) en position de rétraction normale.

7. Amortisseur-vérin selon l'une des revendications 2 à 6, caractérisé par le fait que la tige creuse (102) présente extérieurement une butée (143) de fin de course coopérant avec le bord libre (144) du corps cylindrique (101) pour limiter la course de rétraction en cas d'atterrissage en catastrophe.

8. Amortisseur-vérin selon la revendication 1, caractérisé par le fait que le moyen d'écrêtage d'efforts comporte un tube (255) dont l'écrasement procure l'absorption d'énergie recherchée, ce tube étant logé dans un corps d'extension (250) qui reçoit télescopiquement le corps cylindrique (201).

9. Amortisseur-vérin selon la revendication 8, caractérisé par le fait que le corps cylindrique (201) et le corps d'extension (250) sont liés entre eux par au moins un pion (252) qui est prévu pour se rompre par cisaillement sous un effort prédéterminé.

10. Amortisseur-vérin selon la revendication 8 ou 9, caractérisé par le fait que le corps d'extension (250) porte une tige centrale creuse (245) qui traverse le fond (204) du corps cylindrique (201) formant butée pour le piston séparateur (226), ladite tige creuse présentant un orifice latéral (249) par l'intermédiaire duquel la chambre de fluide hydraulique (228) délimitée par ledit fond et ledit piston séparateur communique avec le circuit hydraulique de l'aérodyne, via un orifice associé (229) dudit corps d'extension.

11. Amortisseur-vérin selon la revendication 10, caractérisé par le fait que le piston séparateur (226) coulisse sur la tige centrale creuse (245) du corps d'extension (250), et l'autre butée (260) dudit piston séparateur est portée par ladite tige centrale creuse.

12. Amortisseur-vérin selon la revendication 11, caractérisé par le fait que la tige centrale creuse (245) se termine par un élargissement (260) qui constitue à la fois l'autre butée du piston séparateur (226), et une butée pour la tige creuse (202) limitant la course de rétraction en cas d'atterrissage en catastrophe.

13. Amortisseur-vérin selon l'une des revendications 8 à 12, caractérisé par le fait que la tige creuse (202) présente extérieurement une butée (243) de fin de course coopérant avec le bord libre (244) du corps cylindrique (201) en fin de rétraction normale.

14. Amortisseur-vérin selon l'une des revendications 8 à 13, caractérisé par le fait qu'un moyen déformable d'anti-rotation, par exemple une lame élastique (256), est prévu entre le corps cylindrique (201) et le corps d'extension (250).
